# EUROPEAN PATENT APPLICATION

(11) **EP 4 503 808 A1**
(43) Date of publication of application: **05.02.2025**
(21) Application number: 23826147.3
(22) Date of filing: 06.06.2023
(51) Int. Cl.: H04W 72/04

(54) **RESOURCE MANAGEMENT METHOD, AND ELECTRONIC DEVICE AND COMPUTER-READABLE STORAGE MEDIUM**

(30) Priority: 22.06.2022 CN 202210710621
(71) Applicant: ZTE Corporation, Shenzhen, Guangdong 518057 (CN)
(72) Inventor: DU, Gaopeng, Shenzhen, Guangdong 518057 (CN); WU, Feng, Shenzhen, Guangdong 518057 (CN); SI, Wei, Shenzhen, Guangdong 518057 (CN)
(74) Representative: Canzler & Bergmeier Patentanwälte Partnerschaft mbB
(86) International application number: PCT/CN2023/098540
(87) International publication number: WO 2023/246498

(57) **Abstract**

Provided in the present disclosure are a resource management method, and an electronic device and a computer-readable storage medium. The resource management method comprises: determining whether the remaining inactive time of a user equipment (UE) for a target bearer node is used up; and if the remaining inactive time of the UE for the target bearer node is used up, releasing resources allocated to the UE, wherein the remaining inactive time comprises the preset inactive time total duration minus the sum of continuous inactive times of the UE at all nodes, and the preset inactive time total duration corresponds to the target bearer node.

## Description

### CROSS-REFERENCE TO RELATED APPLICATIONS

The present disclosure claims the priority of Chinese Patent Application No. 202210710621.3, filed on June 22, 2022, the contents of which are incorporated herein in their entirety by reference.

### TECHNICAL FIELD

The present disclosure relates to the field of communications, and in particular, to a resource management method, an electronic device, and a computer-readable storage medium.

### BACKGROUND

Through a New Radio (NR)-NR Dual Connectivity (NR-DC) function, NR enables a Stand Alone (SA) terminal to access at a 5G frequency range 1 (FR1), and simultaneously establish a 5G (FR1) radio connection, downlink data may be transmitted through a 5G (FR1) or 5G (FR2) radio interface, uplink data is delivered to the NR through the 5G (FR1) or 5G (FR2) radio interface, and the NR transmits the uplink data to a core network through an NG interface. There are two types of frames: (1) User equipment (UE) is respectively connected to one NR serving as a master node (MN) and one NR serving as a secondary node (SN), the NR (FR1) is connected to 5G Core Network (5GC) through the NG interface, and to the NR (FR2) through an XN interface, the NR (FR2) is connected to 5GC through an NG-U interface; (2) The UE is connected to one NR including a plurality of distributed units (DUs), one DU (FR1) servers as the MN, one DU (FR2) serves as the SN, and the NR is connected to the 5GC through the NG interface.

In a NR-DC system, the same as an SA network, resources of an access network are limited, and the number of users to be accommodated is also limited. A phenomenon often occurs during an existing network executing: during operation of a next Generation Node B (gNB), a session or flow established by a user has no user data for a long time, in order to save precious system resources, especially to improve a resource utilization rate under a heavy system load, limited resources are provided to a user who really expects them, operators desires to accurately and quickly release the session and the flow of packet data units (PDUs) and user connections without any data to be transmitted.

### SUMMARY

In a first aspect, the present disclosure provides a resource management method, including: determining whether remaining inactive time of UE for a target bearer node is exhausted; and in response to that the remaining inactive time of the UE for the target bearer node is exhausted, releasing resources allocated to the UE, the remaining inactive time includes a result of subtracting a sum of continued inactive time of the UE occurred at all nodes from a total preset inactive time duration, the total preset inactive time duration corresponds to the target bearer node.

In a second aspect, the present disclosure provides an electronic device, including: at least one processor; a memory having at least one computer program stored thereon, the at least one computer program, executed by the at least one processor, causes the at least one processor to implement the resource management method in the first aspect; and at least one I/O interface connected between the processor and the memory and configured to implement information interaction between the processor and the memory.

In a third aspect, the present disclosure provides a computer-readable storage medium having a computer program stored thereon, the computer program, executed by a processor, causes the processor to implement the resource management method in the first aspect.

### BRIEF DESCRIPTION OF DRAWINGS

Fig. 1 is a flowchart of a resource management method according to the present disclosure.
Fig. 2 is a flowchart of a resource management method with a MN as a main body according to the present disclosure.
Fig. 3 is a flowchart of a resource management method with a MN as a main body according to the present disclosure.
Fig. 4 is a flowchart of a resource management method with a SN as a main body according to the present disclosure.
Fig. 5 is a flowchart of a resource management method with a SN as a main body according to the present disclosure.
Fig. 6 is a schematic diagram of a user inactivity processing flow in a NR-DC scenario according to the present disclosure.
Fig. 7 is a flowchart of transferring of continued inactive time of UE in a NR-DC scenario (taking SN addition as an example) according to the present disclosure.
Fig. 8 is a flowchart of changing a MCG bearer to a SCG bearer according to the present disclosure.
Fig. 9 is a flowchart of changing a MN terminal bearer to a SN terminal bearer according to the present disclosure.
Fig. 10 is a flowchart of changing a SN terminal bearer to a MN terminal bearer according to the present disclosure.
Fig. 11 is a flowchart of transferring of continued inactive time of UE in response to that a SN changes according to the present disclosure.
Fig. 12 is a schematic diagram of an electronic device according to the present disclosure.
Fig. 13 is a schematic diagram of a computer-readable storage medium according to the present disclosure.

### DETAIL DESCRIPTION OF EMBODIMENTS

It should be understood that the specific embodiments described herein are only used to illustrate the present disclosure and do not limit the present disclosure.

In following description, suffixes such as "module", "component", or "unit" used to indicate elements are used only for facilitating the explanation of the present disclosure, and have no peculiar meaning by themselves. Thus, terms "module", "component" or "unit" may be used interchangeably.

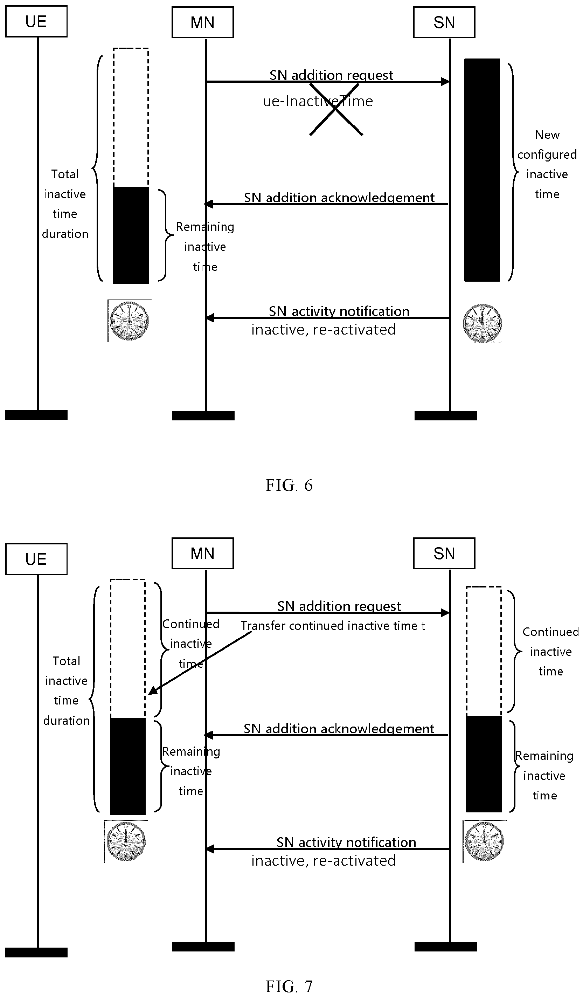

In an existing SA system, high power consumption is a problem to be solved urgently for a terminal or a system device, especially in a case where a NR-DC system is networked at a low or high frequency, high-frequency NR power consumption and terminal power consumption are desired to be reduced as soon as possible, and the PDU session or flow is desired to be released as soon as possible in response to that there is no data at the high frequency, so as to achieve a purpose of saving energy for the system or saving power for the terminal. For the PDU session or flow without any data, processing may be performed through a user inactivity function, but there are currently three problems as below in the NR-DC scenario, as shown in Fig. 6.

1). A MN initiates a SN addition request message including information of a bearer type and a Packet Data Convergence Protocol (PDCP) bearer type (e.g. MN terminal, SN terminal). The MN initiates a SN addition request measurement trigger, maintains a UE inactivity timer for the session or flow of the UE existed before the SN is added, but does not carry remaining time of the inactivity timer to the SN by the message in response to that the SN is added.

2). The SN receives a bearer service message of the MN, establishes a corresponding bearer, and returns an acknowledge response to the MN. If it is a SN terminal bearer, services may change from a Master Cell Group (MCG) bearer to a Secondary Cell Group (SCG) bearer, and the UE inactivity timer is restarted at the target bearer node.

3). The SN reports a UE inactivity state periodically or in response to an event trigger according to a local inactivity timer mechanism. If the reported SN activity notification message carries an inactive indication indicating that the UE is inactive, the MN decides a UE inactivity release strategy. If the reported SN activity notification message carries an indication indicating that the UE is reactivated, the state is reversed, and the MN reactivates service bearer at the SN side. Since an inactivity timer of the SN is maintained by the SN, it does not know how long the UE has been in the inactivity state at the MN, and is not updated according to the UE inactivity state before the SN is added, there may be a problem that a total duration of the UE inactivity state is too long.

For the above problems, some studies have found that: in the related NR-DC technique, inactive time that the UE has experienced is not transferred to a new bearer node in a case where the bearer is changed, which causes an inactivity state of the UE to be reset after the bearer is changed, resulting in increased service power consumption and waste of radio interface resources. In the NR-DC scenario, a MN bearer controls a UE inactivity timer, the SN only reports that a state of the UE is active or inactive, and the MN decides to release or not. In response to that the bearer is changed from a MCG bearer to a SCG bearer (or changed from a MN terminal bearer to a SN terminal bearer), the UE inactivity timer cannot continue to be transferred at the original MN bearer, so that the timer is to be restarted after the bearer is changed. However, a protocol specifies that a range of the UE inactivity timer (UE-InactiveTime) is [1s, over 30 days]. If a dual connection bearer change procedure does not inherit a relevant counter, there is a great impact on user experience, for example, if the UE inactivity timer is too long, not only the power consumption is very high, but also precious radio resources of a wireless system are consumed.

The current standard protocol specifies an Xn port switching in SA systems, a source gNB transfers a UE-Inactivetime cell to a target gNB through an Xn port container, and the target gNB continues the UE inactivity state after receiving the cell, so that an utilization rate of radio resources and power saving of a terminal are improved. And the 3GPP protocol fails to take the above into account. The UE remains connected to both NR-DC base stations simultaneously and fails to efficiently transfer an inactivity time mechanism of the user in a case where the service bearer changes from one base station to another. Therefore, a new counter is to be configured if the service is migrated to a new bearer, which is likely to increase a connection state time of the UE, and in a state where the user has no service expectation, the connection state time of the terminal is increased, and radio resources are consumed and wasted.

Based on the above analysis, the present disclosure provides that a ue-InactiveTime transfer mode under NR-DC can be used for optimizing a management for radio resources, so as to achieve effects of saving the radio resources and reducing power consumption.

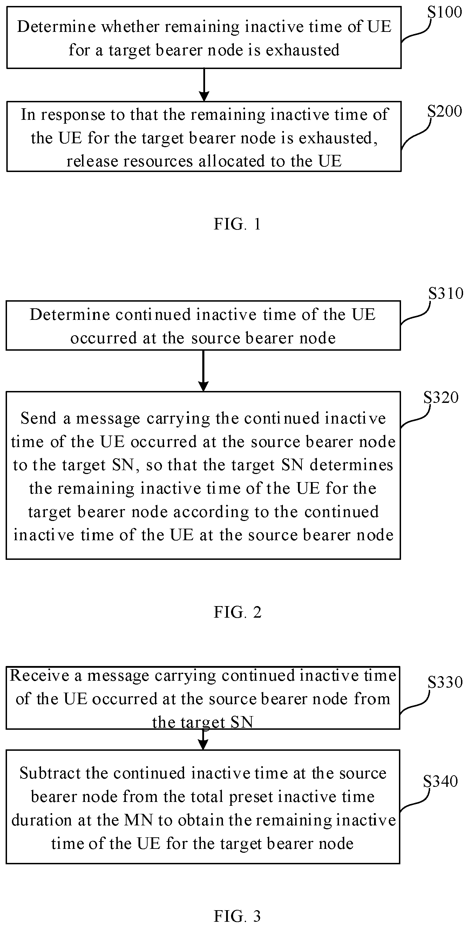

As a first aspect of the present disclosure, embodiments of the present disclosure provide a resource management method, and as shown in Fig. 1, the resource management method includes following operations S100 and S200.

At operation S100, determining whether remaining inactive time of UE for a target bearer node is exhausted.

At operation S200, in response to that the remaining inactive time of the UE for the target bearer node is exhausted, releasing resources allocated to the UE, the remaining inactive time includes a result of subtracting a sum of continued inactive time of the UE occurred at all nodes from a total preset inactive time duration, the total preset inactive time duration corresponds to the target bearer node.

Regardless of whether the service of the UE being currently carried by the MN or the SN, if the bearer is changed, the continued inactive time of the UE at the source bearer node is transferred to the target bearer node, and the remaining inactive time of the UE at the target bearer node is obtained by subtracting the continued inactive time of the UE at the source bearer node from the total preset inactive time duration at the target bearer node. The MN may transfer a UE inactivity timer to the SN to continue the timer configured at the MN node, and similarly, the SN may transfer the UE inactivity timer to the MN to continue the timer configured at the SN node.

Since the UE inactive time is transferred and inherited every time the bearer changes, the sum of the continued inactive time at all previous source bearer nodes carrying the service of the UE is subtracted at the target bearer node each time. If a subtraction result is less than or equal to 0, it is directly considered that the remaining inactive time of the UE for the target bearer node is exhausted; if the subtraction result is greater than 0, the result is taken as the remaining inactive time of the UE for the target bearer node to continue timing. In response to that the remaining inactive time is exhausted, the MN is triggered to decide to release the resources allocated to the UE.

Fig. 7 is a flowchart of transferring of continued inactive time of UE in a NR-DC scenario (taking SN addition as an example). The processing procedure is as follows in contrast to the current processing procedure in the NR-DC scenario described above.
1). A MN initiates a SN addition request message including information of a bearer type and a PDCP bearer type (e.g. MN terminal, SN terminal). The MN initiates a SN addition request measurement trigger, maintains a UE inactivity timer for the session or flow of the UE existed before the SN is added, and in response to that the SN is added, the MN carries the remaining time of the inactivity timer of the UE to the SN.
2). The SN receives a bearer service message of the MN, establishes a corresponding bearer, and returns a response to the MN. If it is a SN terminal bearer, services may change from a MCG bearer to a SCG bearer, the SN may make decision, and may inherit a remaining inactivity timer of the UE, or may set new timer time by itself.
3). The SN reports a UE inactivity state periodically or in response to an event trigger according to the UE inactivity timer transferred by the MN. If an inactive indication indicating that the UE is inactive is carried, the MN decides a UE inactivity release strategy. If an indication indicating that the UE is reactivated is carried, the state is reversed, the MN reactivates service bearer at the SN. Since the SN inactivity timer is maintained by the MN in a unified way and the remaining inactivity timer is inherited after the SN is added, an overall inactive time of the UE can be controlled more precisely.

It should be noted that, in addition to the above SN addition scenario, in other bearer change flows in the NR-DC scenario, as listed in Tables 1 and 2, a bearer change flow between MCG, Split and SCG, a bearer type change from the MN terminal bearer to the SN terminal bearer, a bearer type change from the SN terminal bearer to the MN terminal bearer, a change flow from one SN to another SN, and the like, also can adopt the resource management method provided in the present disclosure, by the ue-InactiveTime transfer solution, not only the management of radio resources is optimized, but also the power consumption is reduced.

**Table 1 Change of MCG/SCG/SPLIT bearers**

| Bearer change (Change from row to column) | MCG Bearer | Split Bearer | SCG Bearer |
|---|---|---|---|
| MCG Bearer | / | Y | Y |
| Split Bearer | Y | / | Y |
| SCG Bearer | Y | Y | / |

**Table 2 Change of MN/SN terminal bearer**

| Bearer change (Change from row to column) | MN terminal Bearer | SN terminal Bearer |
|---|---|---|
| MN terminal Bearer | / | Y |
| SN terminal Bearer | Y | / |

In the process of transferring and inheriting continued inactive time of the UE, a calculation principle as in Table 3 below may be employed. T1 is a total preset inactive time duration at the MN, T2 is a total preset inactive time duration at the SN, t is continued inactive time which is transferred in response to that the bearer is changed.

**Table 3 Calculation principle of timer**

| (a case where the MN serves as the source bearer node and the SN serves as the target bearer node is taken as an example) | | | |
|---|---|---|---|
| Configuration T1 of MN | Transferred Time t | Configuration of SN Timer | Timer Configuration at SN Side |
| T1<infinity | t<infinity | T2=infinity | Timer is not started at target bearer node side. |
| T1<infinity | t<infinity | T2< infinity | Timer is not started in response to that T2 is less than or equal to t, the SN immediately notifies the MN that the Session or Flow is in a UE inactivity state. |
| | | | Timer is started for T2-t in response to that T2 is greater than t. |
| T1=infinity | Not to be transferred | T2<infinity | Timer is started for T2. |
| T1=infinity | Not to be transferred | T2=infinity | Timer is not started at SN side. |

In some implementations, as shown in Fig. 2, the current node is a MN, a source bearer node for services of the UE is the MN, the target bearer node is a target SN, before the remaining inactive time of the UE for the target bearer node is exhausted, the resource management method further includes following operations S310 and S320.

At operation S310, determining continued inactive time of the UE occurred at the source bearer node.

At operation S320, sending a message carrying the continued inactive time of the UE occurred at the source bearer node to the target SN, so that the target SN determines the remaining inactive time of the UE for the target bearer node according to the continued inactive time of the UE at the source bearer node.

For the MN, any process involving a change of service bearer of the UE may result in transferring of the continued inactive time of the UE occurred at the source bearer node to the target bearer node. The continued inactive time of the UE occurred at the source bearer node may be transferred through message interaction between the source bearer node and the target bearer node during the bearer changing, so as to achieve synchronization of the duration of the continued inactive time of the UE between the source bearer node and the target bearer node.

In some implementations, sending the message carrying the continued inactive time of the UE occurred at the source bearer node to the target SN includes: sending a SN addition request message carrying the continued inactive time of the UE occurred at the source bearer node to the target SN.

The SN addition scenario has been introduced in the above description referring to Fig. 7, and is not repeated herein.

In some implementations, sending the message carrying the continued inactive time of the UE occurred at the source bearer node to the target SN includes: sending a SN modification request message carrying the continued inactive time of the UE occurred at the source bearer node to the target SN.

In some implementations, as shown in Fig. 3, the current node is a MN, a source bearer node for services of the UE is a target SN, the target bearer node is the MN, before the remaining inactive time of the UE for the target bearer node is exhausted, the resource management method further includes following operations S330 and S340.

At operation S330, receiving a message carrying continued inactive time of the UE occurred at the source bearer node from the target SN.

At operation S340, subtracting the continued inactive time at the source bearer node from the total preset inactive time duration at the MN to obtain the remaining inactive time of the UE for the target bearer node.

For the MN, it may involve that the service is changed from the MN bearer to the SN bearer (described above), or may involve that the service is changed from the SN bearer to the MN bearer, the SN is the source bearer node and the MN is the target bearer node. Although the MN is the master node, since the service is carried by the SN, the MN cannot know in real time how long time the service of the UE is inactive at the SN, the SN transfers the continued inactive time of the UE at the SN to the MN, and the MN obtains the remaining inactive time of the UE at the MN by subtracting the continued inactive time at the source bearer node from the total preset inactive time duration at the MN.

In addition, in a case where a service is changed form a first SN bearer to a second SN bearer, since there is no message interaction between the SNs, the first SN transfers continued inactive time to the MN, and then the MN transfers the continued inactive time to the second SN newly added.

These processes still follow those described above, i.e., any process involving a change of service bearer of the UE may result in transferring of the continued inactive time of the UE occurred at the source bearer node to the target bearer node. The continued inactive time of the UE occurred at the source bearer node may be transferred through message interaction between the source bearer node and the target bearer node during the bearer changing, so as to achieve synchronization of the duration of the continued inactive time of the UE between the source bearer node and the target bearer node.

In some implementations, receiving the message carrying the continued inactive time of the UE occurred at the source bearer node includes: receiving a SN modification request message carrying the continued inactive time at the source bearer node from the target SN.

In some implementations, receiving the message carrying the continued inactive time of the UE occurred at the source bearer node includes: receiving a SN release request message carrying the continued inactive time at the source bearer node from the target SN.

In some implementations, determining whether the remaining inactive time of the UE for the target bearer node is exhausted includes: in response to that the service of the UE is currently carried by the MN, detecting, by the MN, whether the remaining inactive time of the UE for the target bearer node is exhausted.

In some implementations, determining whether the remaining inactive time of the UE for the target bearer node is exhausted includes: in response to that the service of the UE is currently carried by the target SN, and the MN receives a SN activity notification message carrying an inactive indication indicating that the UE is inactive, determining that the remaining inactive time of the UE for the target bearer node is exhausted.

In the NR-DC scenario, since the service of the UE may be subjected to the change of bearer between any nodes, the service of the UE may be currently carried on the MN or the SN.

If the service of the UE is currently carried by the MN, since the MN is the master node which can decide to release the UE, it can decide to release the resources allocated to the UE as long as the MN locally detects that the remaining inactive time of the UE at the MN is exhausted.

If the service of the UE is currently carried by the SN, the MN cannot sense in real time whether the UE is active and whether the remaining inactive time is exhausted. Therefore, the SN issues a notification to the MN in response to that the SN detects that the remaining inactive time of the UE at the SN is exhausted. An existing SN activity notification message carrying an inactive indication indicating that the UE is inactive may be used to indicate that the remaining inactive time of the UE has been exhausted at the SN, or other message cells may carry a specific field to indicate that the remaining inactive time of the UE has been exhausted at the SN, so as to notify the MN in time to release the resources of the UE.

In some implementations, the resource management method further includes: before releasing the resources allocated to the UE, in response to that a SN activity notification message carrying an indication indicating that the UE is reactivated is received from the target SN, revoking a release decision made for the UE.

In some special time sequence scenarios, i.e., the SN has sent the SN activity notification message, carrying an inactive indication indicating that the UE is inactive, to the MN, but the MN does not release resources allocated to the UE for some reasons (for example, the UE has a plurality of sessions or flows, and there are still active sessions or flows in the plurality of sessions or flows), if the SN receives a service Flow related to the UE again, which indicates that the service of the UE carried by the SN is reactivated, the remaining inactive time of the UE should be reset, the continued inactive time is cleared to zero, and an indication indicating that the UE is reactivated is simultaneously sent to the MN, so as to notify the MN to revoke the release decision made for the UE.

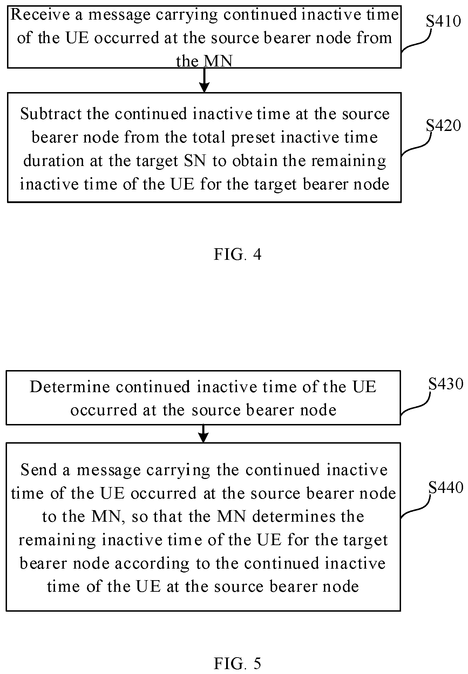

In some implementations, as shown in Fig. 4, the current node is a target SN, a source bearer node for services of the UE is a MN, the target bearer node is the target SN, before the remaining inactive time of the UE for the target bearer node is exhausted, the resource management method further includes following operations S410 and S420.

At operation S410, receiving a message carrying continued inactive time of the UE occurred at the source bearer node from the MN.

At operation S420, subtracting the continued inactive time at the source bearer node from the total preset inactive time duration at the target SN to obtain the remaining inactive time of the UE for the target bearer node.

For the SN, still following those described above, i.e., any process involving a change of service bearer of the UE may result in transferring of the continued inactive time of the UE occurred at the source bearer node to the target bearer node. The continued inactive time of the UE occurred at the source bearer node may be transferred through message interaction between the source bearer node and the target bearer node during the bearer changing, so as to achieve synchronization of the duration of the continued inactive time of the UE between the source bearer node and the target bearer node.

In a case where the service of the UE changes from the MN bearer to the SN bearer, the message sent from the MN to the SN may carry the continued inactive time of the UE at the MN, after the SN receives the message carrying the continued inactive time of the UE at the MN, the remaining inactive time of the UE for the SN is obtained by subtracting the continued inactive time of the UE at the MN from the local total preset inactive time duration, then the SN continues to detect whether the remaining inactive time is exhausted.

In some implementations, receiving the message carrying the continued inactive time of the UE occurred at the source bearer node from the MN includes: receiving a SN addition request message carrying the continued inactive time of the UE occurred at the source bearer node from the MN.

In some implementations, receiving the message carrying the continued inactive time of the UE occurred at the source bearer node from the MN includes: receiving a SN modification request message carrying the continued inactive time of the UE occurred at the source bearer node from the MN.

In some implementations, the resource management method further includes: in response to that the remaining inactive time of the UE for the target bearer node being exhausted is detected at the SN, sending a SN activity notification message, carrying an inactive indication indicating that the UE is inactive, to the MN.

After the SN receives the message carrying the continued inactive time of the UE at the MN, the remaining inactive time of the UE for the SN is obtained by subtracting the continued inactive time of the UE at the MN from the local total preset inactive time duration, then the SN continues to detect, through the timer, whether the remaining inactive time is exhausted.

If a subtraction result of subtracting the continued inactive time of the UE at the MN from the local total preset inactive time duration is less than or equal to 0, it is directly considered that the remaining inactive time of the UE for the target bearer node is exhausted; if the subtraction result is greater than 0, the result is taken as the remaining inactive time of the UE for the target bearer node to continue timing. If the SN detects that the remaining inactive time is exhausted, the inactive indication indicating that the UE is inactive is sent to the MN, to trigger the MN to decide to release the resources allocated to the UE.

In some implementations, after sending the SN activity notification message, carrying the inactive indication indicating that the UE is in active, to the MN, the resource management method further includes: in response to that service data of the UE appears before the resources allocated to the UE are released, clearing the remaining inactive time to zero, and re-taking the total preset inactive time duration as the remaining inactive time of the UE for the target bearer node; and sending a SN activity notification message, carrying an indication indicating that the UE is reactivated, to the MN.

In some special time sequence scenarios, i.e., the SN has sent the SN activity notification message, carrying an inactive indication indicating that the UE is inactive, to the MN, and the MN does not release resources allocated to the UE for some reasons, if the SN receives a service Flow related to the UE again, which indicates that the service of the UE carried by the SN is reactivated, the remaining inactive time of the UE should be reset, the continued inactive time is cleared to zero, and an indication indicating that the UE is reactivated is simultaneously sent to the MN, so as to notify the MN to revoke the release decision made for the UE.

In some implementations, as shown in Fig. 5, a source bearer node for services of the UE is the target SN, the target bearer node is a MN, before the remaining inactive time of the UE for the target bearer node is exhausted, the resource management method further includes following operations S430 and S440.

At operation S430, determining continued inactive time of the UE occurred at the source bearer node.

At operation S440, sending a message carrying the continued inactive time of the UE occurred at the source bearer node to the MN, so that the MN determines the remaining inactive time of the UE for the target bearer node according to the continued inactive time of the UE at the source bearer node.

As described above, in addition to that the service is changed from the MN bearer to the SN bearer, it may involve that the service is changed from the SN bearer to the MN bearer, or the service is changed from the first SN bearer to the second SN bearer. In both the latter two procedures, the SN serves as a source bearer node and the MN serves as a target bearer node, and still following those described above, i.e., any process involving a change of service bearer of the UE may result in transferring of the continued inactive time of the UE occurred at the source bearer node to the target bearer node. The continued inactive time of the UE occurred at the source bearer node may be transferred through message interaction between the source bearer node and the target bearer node during the bearer changing, so as to achieve synchronization of the duration of the continued inactive time of the UE between the source bearer node and the target bearer node.

In some implementations, sending the message carrying the continued inactive time of the UE occurred at the source bearer node to the MN includes: sending a SN modification request message carrying the continued inactive time of the UE occurred at the source bearer node to the MN.

In some implementations, sending the message carrying the continued inactive time of the UE occurred at the source bearer node to the MN includes: sending a SN release request message carrying the continued inactive time of the UE occurred at the source bearer node to the MN.

A specific application of the resource management method described in the first aspect of the present disclosure in four processes are respectively described below in detail with reference to four examples respectively.

### Example 1

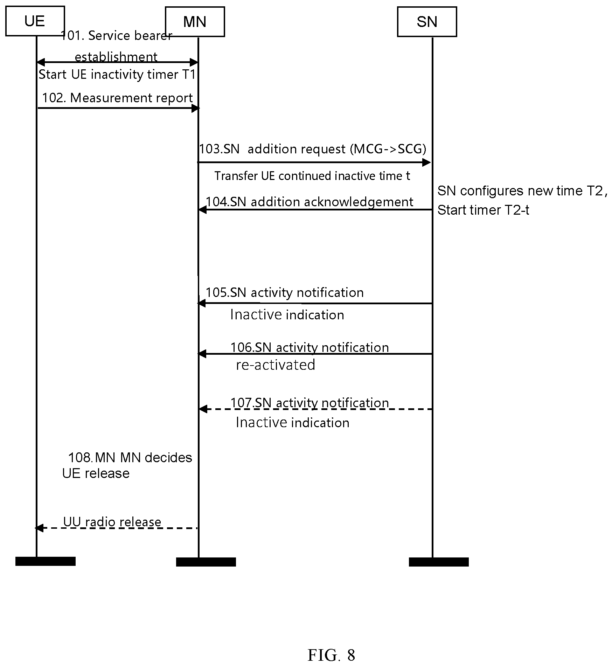

Example 1 describes a process of transferring of continued inactive time of UE in a procedure of changing bearer from MCG to SCG, and a schematic diagram is shown in Fig. 8.

At operation 101, in a NR-DC scenario, a MN establishes a MCG bearer and issues a SN measurement control, the MN triggers a SN addition process. Before the SN is added, the MN starts ue-InactiveTime T1 (i.e., a UE inactivity timer such as 10 minutes) less than infinity according to a service type.

At operation 102, the UE reports a B1/B2 measurement report, and the MN triggers the SN addition process.

At operation 103, a SCG bearer of the SN terminal is established in a SN addition request message to trigger a change from the MCG bearer to the SCG bearer, and the SN addition request message carries continued inactive time t (e.g., two minutes, less than infinity) of the UE, assuming that a UE inactivity state at the MCG bearer have been maintained for 8 minutes.

At operation 104, the SN receives the SN addition request message, and establishes a related bearer, for example, a timer T2 configured by the SN is greater than t, and the SN starts the timer for (T2-t) with referring to the configuration principle of timer in Table 3.

At operations 105 to 106, after the bearer is changed to the SCG bearer, the SN continues with remaining inactive time of the UE. In an internal of the SN, CU-C (Centralized Unit-Control plane) transfers the timer (T2-t) to CU-U (Centralized Unit-User plane) and DU (Distributed Unit).

If the UE is still in the inactivity state, after the timer (T2-t) is overtime, the SN sends a SN activity notification, carrying an inactive indication indicating that the UE is inactive, to the MN.

If a Session or Flow of the UE occurs again, a state of the UE is reversed, the SN immediately sends a SN activity notification, carrying an indication indicating that the UE is reactivated, to the MN.

At operations 107 to 108, the UE is still in the inactivity state, the SN continues to be triggered to send a SN activity notification, carrying the inactive indication indicating that the UE is inactive, to the MN. The MN decides whether to release the resources allocated to the UE, and if the MN bearer also meets a release condition, a release of radio resources is initiated.

### Example 2

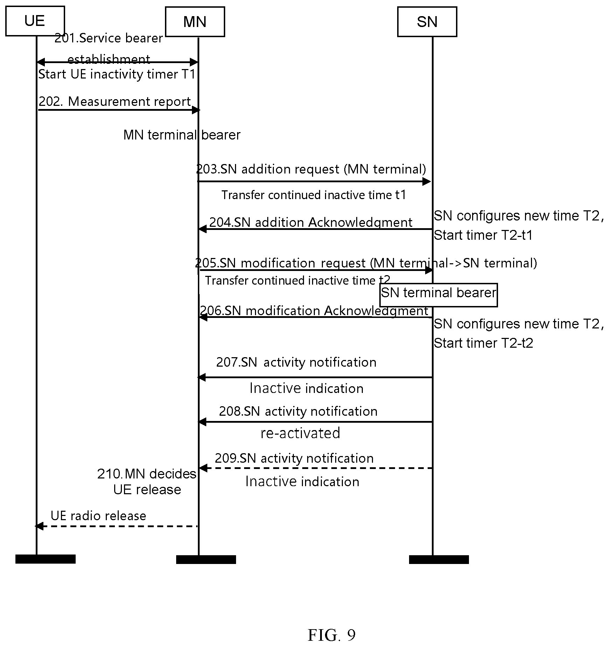

Example 2 describes a process of transferring of continued inactive time of UE in a procedure of a change from MN terminal bearer to SN terminal bearer, and a schematic diagram is shown in Fig. 9.

At operation 201, in a NR-DC scenario, a MN establishes a MCG bearer and issues a SN measurement control, the MN triggers a SN addition process. Before the SN is added, the MN starts ue-InactiveTime T1 (i.e., a UE inactivity timer such as 10 minutes) less than infinity according to service type.

At operation 202, the UE reports a B1/B2 measurement report, and the MN triggers the SN addition process.

At operation 203, a MN terminal bearer is established in a SN addition request message, and the SN addition request message carries continued inactive time t1 (e.g., 7 minutes, less than infinity) of the UE at the MN, assuming that a UE inactivity timer at the MCG bearer have been maintained for 3 minutes.

At operation 204, the SN receives the SN addition request message, and establishes a related bearer, and in response to that a timer T2 configured by the SN is greater than t1, the SN starts the timer for (T2-t1) with referring to the configuration principle of timer.

At operations 205 to 206, due to a configuration of resources, the MN triggers a modification request for changing from the MN terminal bearer to the SN terminal bearer, the modification request carries continued inactive time t2 of the UE at the MN.

At operations 207 to 208, after the bearer is changed to the SN terminal, in response to that a timer T2 configured by the SN is greater than t2, the SN starts the timer for (T2-t2) with referring to the configuration principle of timer in Table 3.

If the UE is still in the inactivity state, after the timer (T2-t2) is overtime, the SN sends a SN activity notification, carrying an inactive indication indicating that the UE is inactive, to the MN.

If the state of the UE is reversed, the SN immediately sends a SN activity notification carrying an indication indicating that the UE is reactivated to the MN.

At operations 209 to 210, the UE is still in the inactivity state, the SN continues to be triggered to send a SN activity notification, carrying the inactive indication indicating that the UE is inactive, to the MN. The MN decides whether to release the resources allocated to the UE, and if the MN bearer also meets a release condition, a release of radio resources is initiated.

### Example 3

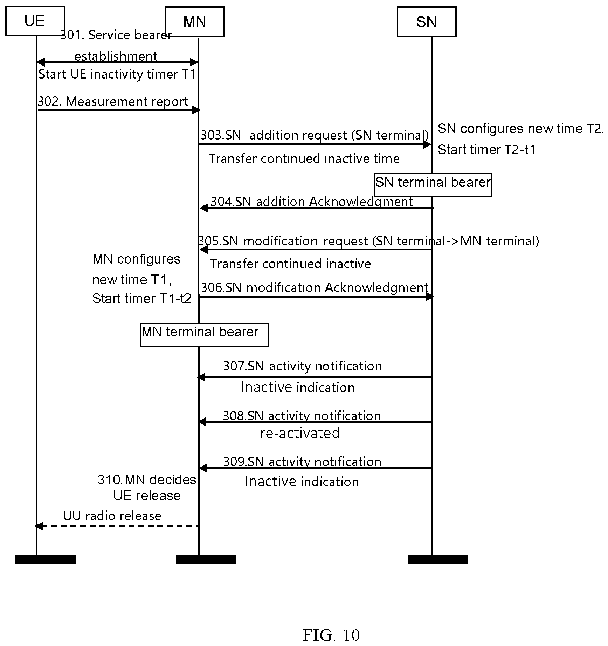

Example 3 describes a process of transferring of continued inactive time of UE in a procedure of changing from SN terminal bearer to MN terminal bearer, and a schematic diagram is shown in Fig. 10.

At operation 301, in a NR-DC scenario, a MN establishes a bearer and issues a SN measurement control, the MN triggers a SN addition process. Before the SN is added, the MN starts ue-InactiveTime T1 (i.e., a UE inactivity timer such as 60 seconds) less than infinity according to service type.

At operation 302, the UE reports a B1/B2 measurement report, and the MN triggers the SN addition process.

At operation 303, the MN sends a SN addition request message to the SN to establish a MN terminal bearer, and the SN addition request message carries continued inactive time t1 (such as 30 seconds, less than infinity) of the UE at the MN.

At operation 304, the SN receives the SN addition request message, and establishes a related bearer. The SN configures a new time T2 (e.g., 40 seconds) according to a bearer type of a service.

In response to that T2 is less than or equal to t1, the timer is not started, the SN immediately notifies the MN that the session or flow is in a UE inactivity state.

In response to that T2 is greater than t1, the timer is started for a time (T2-t1).

At operations 305 to 306, due to a configuration of resources, the SN triggers a modification request for changing from the SN terminal bearer to the MN terminal bearer, the modification request carries continued inactive time t2 (e.g., 6 seconds) of the UE at the MN.

At operations 307 to 308, after the bearer is changed to the MN terminal, the MN configures a new time T1 (e.g., 60 seconds) according to a bearer type of a service, and activate a timer (T1-t2).

In response to that T1 is less than or equal to t2, the MN does not start the timer. Since the UE may have a plurality of services at the SN, the SN also notifies the MN that the Session or Flow is in a UE inactivity state immediately during transferring the bearer.

In response to that T1 is greater than t2, a timer is started for a time (T1-t).

If the UE is still in the inactivity state, after the timer (T1-t) is overtime, the SN sends a SN activity notification carrying an inactive indication indicating that the UE is inactive to the MN.

If a state of the UE is reversed, the SN immediately sends a SN activity notification carrying an indication indicating that the UE is reactivated to the MN.

At operations 309 to 310, the UE is still in the inactivity state, the SN is triggered to send a SN activity notification carrying the inactive indication indicating that the UE is inactive to the MN. The MN decides whether to release the resources allocated to the UE, and if the MN bearer also meets a release condition, a release of radio resources is initiated.

### Example 4

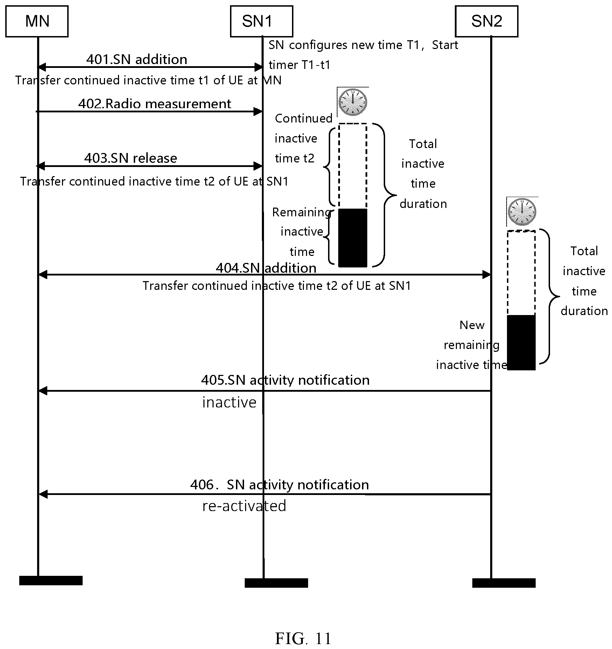

Example 4 describes a process of transferring of continued inactive time of UE in a SN change procedure, and a schematic diagram is shown in Fig. 11.

At operation 401, in a NR-DC scenario, any service is started with establishing MCG bearer, a SN1 measurement control is issued, and a SN1 addition process is triggered. Before the SN1 is added, the MN starts ue-InactiveTime T1 (i.e., a UE inactivity timer such as 5 minutes) according to service type.

At operation 402, the UE reports a B1/B2 measurement report, the MN triggers the SN1 addition process, and a SN1 addition request message carries continued inactive time t1 (e.g., 2 minutes, less than infinity) of the UE at the MN.

At operation 403, due to a radio measurement, the original SN1 cannot provide any service and the service is to be changed to a new SN2. The MN releases the SN1. Since the MN does not know the continued inactive time of the UE at the SN1, the SN1 carries the continued inactive time t2 (e.g., 3 minutes, less than infinity) of the UE at the SN1 in a release request message.

At operation 404, since a bearer is directly transferred from the SN1 to the SN2, and is not transferred to the MN and then transferred from the MN to the SN2, the MN carries the continued inactive time t2 of the UE at the SN1 in a new SN2 addition process, the SN2 configures an updated inactivity timer for (T3-t2), and in response to that T3 is less or equal to t2, the timer is not started, the SN1 immediately notifies the MN that the session or flow is in a UE inactivity state, in response to that T3 is greater than t2, a timer is started for a time (T3-t2).

At operation 405, if the UE is still in the inactivity state, after the timer (T3-t2) is overtime, the SN sends a SN activity notification carrying an inactive indication indicating that the UE is inactive to the MN.

At operation 406, if a state of the UE is reversed, the SN immediately sends a SN activity notification carrying an indication indicating that the UE is reactivated to the MN. Following operations are similar to those in the above Examples, and are not repeated herein.

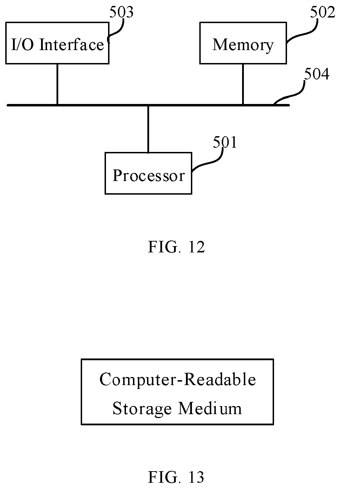

In a second aspect, embodiments of the present disclosure provide an electronic device, and as shown in Fig. 12, the electronic device includes: at least one processor 501; a memory 502 having at least one computer program stored thereon, the at least one computer program, executed by the at least one processor, causes the at least one processor 501 to implement the resource management method described in the first aspect; and at least one I/O interface 503 connected between the processor 501 and the memory 502 and configured to implement information interaction between the processor 501 and the memory 502.

The processor 501 is a device having a capability of processing data, includes, but is not limited to, a Central Processing Unit (CPU), and the like; the memory 502 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 503 is connected between the processor 501 and the memory 502, enables to implement information interaction between the processor 501 and the memory 502, and includes, but is not limited to, a data Bus, and the like.

In some implementations, the processor 501, the memory 502, and the I/O interface 503 are connected together through a bus 504, and are further connected to other components of a computing device.

In a third aspect, embodiments of the present disclosure provide a computer-readable storage medium, and as shown in Fig. 13, the computer-readable storage medium stores a computer program thereon, the computer program, executed by a processor, causes the processor to implement the resource management method described in the first aspect.

With a ue-InactiveTime transfer mode in a NR-DC scenario as provided by the embodiments of the present disclosure, in a case where the session or flow has no data, the continued inactive time of the UE is transferred between the source bearer node and the target bearer node, so as to achieve synchronization of the inactive duration of the UE between the source bearer node and the target bearer node, the resources of the UE can be released in time, the management for radio resources is optimized, precious resources of the system can be saved, and an effect of significantly reducing the power consumption of terminals and system equipment is achieved. It should be understood by those of ordinary skill in the art that all or some of the operations in the method, the functional modules/components in the apparatus described above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). It should be known by those of ordinary skill in the art that the computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store any desired information and can be accessed by a computer. In addition, it should be known by those of ordinary skill in the art that the communication medium generally includes computer-readable instructions, data structures, program modules or other data in a modulated data signal, such as a carrier wave or other transmission mechanism, and may include any information delivery medium.

A part of embodiments and implementations of the present disclosure are described above with reference to the accompanying drawings, but are not intended to limit the scope claimed by the present disclosure. Any modifications, equivalents, and improvements made by those skilled in the art without departing from the scope and essence of the present disclosure are intended to be within the scope claimed by the present disclosure.

## Claims

1. A resource management method, comprising:
determining whether remaining inactive time of user equipment (UE) for a target bearer node is exhausted; and
in response to that the remaining inactive time of the UE for the target bearer node is exhausted, releasing resources allocated to the UE, wherein the remaining inactive time comprises a result of subtracting a sum of continued inactive time of the UE occurred at all nodes from a total preset inactive time duration, the total preset inactive time duration corresponds to the target bearer node.

2. The method of claim 1, wherein a master node (MN) serves as a current node, a source bearer node for services of the UE is the MN, the target bearer node is a target secondary node (SN), the method further comprises:
before the remaining inactive time of the UE for the target bearer node is exhausted, determining continued inactive time of the UE occurred at the source bearer node; and
sending a message carrying the continued inactive time of the UE occurred at the source bearer node to the target SN, so that the target SN determines the remaining inactive time of the UE for the target bearer node according to the continued inactive time of the UE at the source bearer node.

3. The method of claim 2, wherein sending the message carrying the continued inactive time of the UE occurred at the source bearer node to the target SN comprises:
sending a SN addition request message carrying the continued inactive time of the UE occurred at the source bearer node to the target SN.

4. The method of claim 2, wherein sending the message carrying the continued inactive time of the UE occurred at the source bearer node to the target SN comprises:
sending a SN modification request message carrying the continued inactive time of the UE occurred at the source bearer node to the target SN.

5. The method of claim 1, wherein a MN serves as a current node, a source bearer node for services of the UE is a target SN, the target bearer node is the MN, the method further comprises:
before the remaining inactive time of the UE for the target bearer node is exhausted, receiving a message carrying continued inactive time of the UE occurred at the source bearer node from the target SN; and
subtracting the continued inactive time at the source bearer node from the total preset inactive time duration at the MN to obtain the remaining inactive time of the UE for the target bearer node.

6. The method of claim 5, wherein receiving the message carrying the continued inactive time of the UE occurred at the source bearer node from the target SN comprises:
receiving a SN modification request message carrying the continued inactive time at the source bearer node from the target SN.

7. The method of claim 5, wherein receiving the message carrying the continued inactive time of the UE occurred at the source bearer node from the target SN comprises:
receiving a SN release request message carrying the continued inactive time at the source bearer node from the target SN.

8. The method of any one of claims 2 to 7, wherein determining whether the remaining inactive time of the UE for the target bearer node is exhausted comprises:
in response to that the services of the UE is currently carried by the MN, detecting, by the MN, whether the remaining inactive time of the UE for the target bearer node is exhausted.

9. The method of any one of claims 2 to 7, wherein determining whether the remaining inactive time of the UE for the target bearer node is exhausted comprises:
in response to that the services of the UE is currently carried by the target SN, and the MN receives a SN activity notification message carrying an inactive indication indicating that the UE is inactive, determining that the remaining inactive time of the UE for the target bearer node is exhausted.

10. The method of claim 9, further comprising:
before releasing the resources allocated to the UE, in response to that a SN activity notification message carrying an indication indicating that the UE is reactivated is received from the target SN, revoking a release decision made for the UE.

11. The method of claim 1, wherein a target SN serves as a current node, a source bearer node for services of the UE is a MN, the target bearer node is the target SN, the method further comprises:
before the remaining inactive time of the UE for the target bearer node is exhausted, receiving a message carrying continued inactive time of the UE occurred at the source bearer node from the MN; and
subtracting the continued inactive time at the source bearer node from the total preset inactive time duration at the target SN to obtain the remaining inactive time of the UE for the target bearer node.

12. The method of claim 11, wherein receiving the message carrying the continued inactive time of the UE occurred at the source bearer node from the MN comprises:
receiving a SN addition request message carrying the continued inactive time of the UE occurred at the source bearer node from the MN.

13. The method of claim 11, wherein receiving the message carrying the continued inactive time of the UE occurred at the source bearer node from the MN comprises:
receiving a SN modification request message carrying the continued inactive time of the UE occurred at the source bearer node from the MN.

14. The method of any one of claims 11 to 13, further comprising:
in response to that the remaining inactive time of the UE for the target bearer node being exhausted is detected at the SN, sending a SN activity notification message carrying an inactive indication indicating that the UE is inactive to the MN.

15. The method of claim 14, further comprising:
after sending the SN activity notification message carrying the inactive indication indicating that the UE is inactive to the MN, in response to that service data of the UE appears before the resources allocated to the UE are released, clearing the remaining inactive time to zero, and re-taking the total preset inactive time duration as the remaining inactive time of the UE for the target bearer node; and
sending a SN activity notification message carrying an indication indicating that the UE is reactivated to the MN.

16. The method of claim 1, wherein a target SN serves as a current node, a source bearer node for services of the UE is the target SN, the target bearer node is a MN, the method further comprises:
before the remaining inactive time of the UE for the target bearer node is exhausted, determining continued inactive time of the UE occurred at the source bearer node; and
sending a message carrying the continued inactive time of the UE occurred at the source bearer node to the MN, so that the MN determines the remaining inactive time of the UE for the target bearer node according to the continued inactive time of the UE at the source bearer node.

17. The method of claim 16, wherein sending the message carrying the continued inactive time of the UE occurred at the source bearer node to the MN comprises:
sending a SN modification request message carrying the continued inactive time of the UE occurred at the source bearer node to the MN.

18. The method of claim 16, wherein sending the message carrying the continued inactive time of the UE occurred at the source bearer node to the MN comprises:
sending a SN release request message carrying the continued inactive time of the UE occurred at the source bearer node to the MN.

19. An electronic device, comprising:
at least one processor;
a memory having at least one computer program stored thereon, the at least one computer program, executed by the at least one processor, causes the at least one processor to implement the resource management method according to any one of claims 1 to 18; and
at least one I/O interface connected between the processor and the memory and configured to implement information interaction between the processor and the memory.

20. A computer-readable storage medium having a computer program stored thereon, the computer program, executed by a processor, causes the processor to implement the resource management method according to any one of claims 1 to 18.
